(19) Europäisches Patentamt / European Patent Office / Office européen des brevets

(11) **EP 3 923 028 A1**

(12) **EUROPEAN PATENT APPLICATION**
published in accordance with Art. 153(4) EPC

(43) Date of publication:
**15.12.2021 Bulletin 2021/50**

(51) Int Cl.:
*G01S 17/48* (2006.01)    *G01S 15/10* (2006.01)

(21) Application number: **20922499.7**

(22) Date of filing: **25.03.2020**

(86) International application number:
**PCT/CN2020/081061**

(87) International publication number:
**WO 2021/189287 (30.09.2021 Gazette 2021/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SHENZHEN GOODIX TECHNOLOGY CO., LTD.**
**Shenzhen, Guangdong 518045 (CN)**

(72) Inventor: **YANG, Meng-Ta**
**Shenzhen, Guangdong 518045 (CN)**

(74) Representative: **Padial Martinez, Ana Belen**
**Arochi & Lindner**
**C/ Gurtubay Nº 6-3º Izquierda**
**28001 Madrid (ES)**

(54) **RANGING METHOD AND SYSTEM BASED ON TIME OF FLIGHT**

(57)    A time-of-flight based distance measuring method and system are provided. The distance measuring method includes: sending a pulse from a transmitter side intermittently, the pulse being reflected by a target object, a reflected signal being reflected from the target object accordingly; utilizing a receiver side to perform a signal sampling operation multiple times according to a sampling period for a predetermined period of time, and accordingly generate a sampling result of the reflected signal, the predetermined period of time being longer than or equal to two times a pulse period of the pulse; detecting time of flight of the pulse traveling from the transmitter side to the receiver side according to the sampling result; and measuring a distance between the target object and a reference position according to the time of flight. The distance measuring method achieves low power consumption, measures the distance rapidly and maintains good measurement quality.

FIG. 2

**Description**

**TECHNICAL FIELD**

The present disclosure relates to distance measuring and depth sensing techniques and, more particularly, to a time-of-flight based distance measuring method, and a related time-of-flight based distance measuring system.

**BACKGROUND**

In the time-of-flight (ToF) based distance measuring technology, pulsed modulation (PM) is a relatively straightforward measurement mechanism which measures a distance to a target object according to a time difference between emission of a light pulse and reception of a reflected light pulse. The timing control for the pulsed modulation needs to be highly precise. However, a relationship between intensity and duration of a light pulse and a relationship between light response and exposure time of a pixel are both nonlinear, thus reducing precision of a depth image.

To improve detection precision, continuous-wave (CW) modulation is usually utilized to reduce errors caused by measurement devices or ambient light. However, the CW modulation has to continuously send sinusoidal waves to perform sampling and integration operations multiple times, which not only makes the measurement more time consuming but also causes increased power consumption. It is difficult for a terminal device to satisfy the low power requirement of functional modules.

Thus, there is a need for a novel ToF based light sensing mechanism, which can precisely and rapidly measure a distance to a target object while exhibiting low power consumption.

**SUMMARY**

It is a target objective of the present disclosure to provide a time-of-flight (ToF) based distance measuring method, which performs a signal sampling operation multiple times at a receiver side to obtain a sampling result of a reflected signal related to a single pulse, and a distance measuring system utilizing the distance measuring method, to thereby solve the problems of large measurement errors and low-precision depth images in existing ToF based distance measuring systems.

Some embodiments of the present disclosure provide an exemplary time-of-flight based distance measuring method. The distance measuring method includes: sending a pulse from a transmitter side intermittently, wherein the pulse is reflected by a target object, and a reflected signal is reflected from the target object accordingly; utilizing a receiver side to perform a signal sampling operation multiple times according to a sampling period for a predetermined period of time, and accordingly generate a sampling result of the reflected signal, wherein the predetermined period of time is longer than or equal to two times a pulse period of the pulse; detecting time of flight of the pulse traveling from the transmitter side to the receiver side according to the sampling result; and measuring a distance between the target object and a reference position according to the time of flight.

Some embodiments of the present disclosure provide an exemplary time-of-flight based distance measuring system. The distance measuring system includes a pulse generator unit, a control circuit and a time-of-flight sensor. The control circuit, coupled to the pulse generator unit, is configured to control the pulse generator unit to send a pulse intermittently, wherein the pulse is reflected by a target object and a reflected signal is reflected from the target object accordingly. The time-of-flight sensor, controlled by the control circuit, is configured to perform a signal sampling operation multiple times according to a sampling period for a predetermined period of time, and accordingly generate a sampling result of the reflected signal, wherein the predetermined period of time is longer than or equal to two times a pulse period of the pulse. The time-of-flight sensor is further configured to detect time of flight of the pulse traveling from the pulse generator unit to the time-of-flight sensor according to the sampling result, and measure a distance between the target object and the distance measuring system according to the time of flight.

The proposed time-of-flight based sensing scheme or distance measuring scheme can obtain phase shift information and accordingly measure a distance to a target object by sending a single pulse intermittently and taking at least two pulse periods to perform sampling operations, rather than sending a plurality of light pulses continuously and performing corresponding sampling operations multiple times. Thus, the proposed ToF sensing scheme or distance measuring scheme can achieve low power consumption, measure the distance to the target object rapidly, and maintain good measurement quality.

**BRIEF DESCRIPTION OF THE DRAWINGS**

FIG. 1 is a block diagram illustrating an exemplary time-of-flight based distance measuring system in accordance with some embodiments of the present disclosure.

FIG. 2 is a flow chart of an exemplary time-of-flight based distance measuring method in accordance with some embodiments of the present disclosure.

FIG. 3 is a diagram illustrating an exemplary circuit structure of a pixel in the pixel array shown in FIG. 1 in accordance with an embodiment of the present disclosure.

FIG. 4A is a timing diagram illustrating signal waveforms associated with the pixel shown in FIG. 3 in accordance with an embodiment of the present disclosure.

FIG. 4B is a diagram illustrating signal sampling operation performed by the processing circuit shown in FIG. 1 upon respective data sets of output images corresponding to different phase delayed versions of a pulsed light signal.

FIG. 5 illustrates a timing diagram illustrating signal waveforms associated with the pixel shown in FIG. 3 in accordance with another embodiment of the present disclosure.

FIG. 6 is a diagram illustrating an exemplary circuit structure of a pixel in the pixel array shown in FIG. 1 in accordance with another embodiment of the present disclosure.

FIG. 7 is a timing diagram illustrating signal waveforms associated with the pixel shown in FIG. 6 in accordance with an embodiment of the present disclosure.

FIG. 8 is a timing diagram illustrating signal waveforms associated with the pixel shown in FIG. 3 in accordance with another embodiment of the present disclosure.

FIG. 9 is a timing diagram illustrating signal waveforms associated with the pixel shown in FIG. 3 in accordance with another embodiment of the present disclosure.

## DESCRIPTION

Certain terms are used throughout the description and following claims to refer to particular components. As one skilled in the art will appreciate, electronic equipment manufacturers may refer to a component by different names. This document does not intend to distinguish between components that differ in name but not function. In the following description and in the claims, the terms "include" and "comprise" are used in an open-ended fashion, and thus should be interpreted to mean "include, but not limited to". Also, the term "couple" and "coupled" are intended to mean either an indirect or direct electrical connection. Accordingly, if a first device is coupled to a second device, that connection may be through a direct electrical connection, or through an indirect electrical connection via other devices and connections.

The proposed ToF distance measuring scheme can intermittently send a single pulse from a transmitter side, and perform a signal sampling operation multiple times at a receiver side for a predetermined period of time (e.g. a period of time which is two times a pulse period of the pulse) to obtain a sampling result of a corresponding reflected signal (generated in response to the pulse reflected by a target object), thereby realizing a sensing mechanism which simulates CW modulation based on pulsed modulation. Further description is provided below.

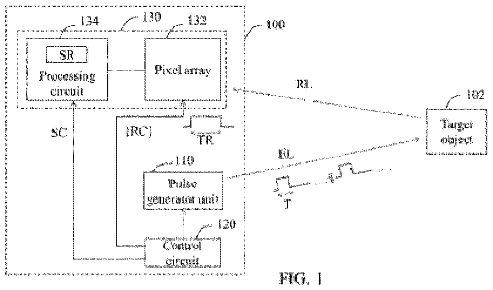

FIG. 1 is a block diagram illustrating an exemplary time-of-flight (ToF) based distance measuring system in accordance with some embodiments of the present disclosure. The distance measuring system 100 can be configured to detect a distance between a target object 102 and the distance measuring system 100. It is worth noting that the distance between the target object 102 and the distance measuring system 100 is supposed to be shorter than or equal to a maximum range of the distance measuring system 100. By way of example but not limitation, the distance measuring system 100 may be implemented as a three-dimensional (3D) imaging system, which utilizes ToF techniques to measure a distance to a surrounding target object, and accordingly obtain depth of field and 3D image information.

It is worth noting that the distance measuring system 100 can be implemented as various types of ToF based distance measuring systems, such as a ToF based optical distance measuring system, a ToF based acoustic distance measuring system, a ToF based laser distance measuring system, or other types of ToF based distance measuring systems. For the sake of brevity, the proposed ToF based distance measuring scheme is described with reference to the following embodiments where the distance measuring system 100 is implemented as a ToF based optical distance measuring system. However, those skilled in the art will recognize that the proposed ToF based distance measuring scheme can be employed in any types of ToF based distance measuring systems.

The distance measuring system 100 may include, but is not limited to, a pulse generator unit 110, a control circuit 120 and a time-of-flight (ToF) sensor 130. The pulse generator unit 110 is configured to send a single pulse intermittently, wherein the pulse has a pulse period T. For example, after sending a pulse, the pulse generator unit 110 would stop sending pulses for a period of time, which may be longer or much longer than the pulse period T. The pulse generator unit 110 can be activated again to send another pulse after the period of time has elapsed.

In the present embodiment, the distance measuring system 100 may be a ToF based optical distance measuring system, wherein the pulse generator unit 110 may be implemented using a light pulse generator unit and configured to generate a pulsed light signal EL. The pulsed light signal EL may be a single light pulse which is intermittently generated. In other words, the light pulse generator unit can intermittently send a single light pulse, which serves as a single pulse intermittently generated by the pulse generator unit 110. For example, the pulse generator unit 110 may include, but is not limited to, a driver circuit and a light emitting unit (not shown in FIG. 1). The driver circuit is configured to drive the light emitting unit to send a single light pulse intermittently. The light emitting unit may be, but is not limited to, a laser diode (LD), a light emitting diode (LED) or other types of light emitting units capable of generating light pulses. A light pulse generated from the laser diode is coherent light, while a light pulse generated from the light emitting diode is incoherent light.

It is worth noting that the pulse generator unit 110 can be configured to generate other types of pulses, such as acoustic pulses or electromagnetic pulses. For example, in some embodiments where the distance measuring system 100 is implemented as an acoustic distance measuring system, the pulse generator unit 110 may be implemented using an acoustic generator. The acoustic generator is configured to intermittently send a single acoustic pulse such as an ultrasonic pulse, wherein the acoustic pulse can serve as a single pulse intermittently generated from the pulse generator unit 110. As another example, in some embodiments where the distance measuring system 100 is implemented as a laser distance measuring system, the pulse generator unit 110 may be implemented using an electromagnetic wave generator. The electromagnetic wave generator is configured to intermittently send a single electromagnetic pulse, which can serve as a single pulse intermittently generated from the pulse generator unit 110.

The control circuit 120, coupled to the pulse genitor unit 110, is configured to control the pulse generator unit 110 to generate the pulsed light signal EL. For example, the control circuit 120 can be configured to control the pulse generator unit 110 to send a single light pulse intermittently. As another example, the control circuit 120 can be configured to control the driver circuit included in the pulse generator unit 110 such that the light emitting unit included in the pulse generator unit 110 can send a single light pulse intermittently. The ToF sensor 130, controlled by the control circuit 120, is configured to sample a reflected signal RL to detect a distance between the distance measuring system 100 (or the ToF sensor 130) and the target object 102. The reflected signal RL is reflected from the target object 102 in response to the pulsed light signal EL reflected by the target object 102. In some embodiments, the control circuit 120 may be a main control unit of a terminal device, which may be located outside the distance measuring system 100.

In the present embodiment, the ToF sensor 130 can be configured to perform a signal sampling operation multiple times according to a sampling period for a predetermined period of time TR, and accordingly generate a sampling result of the reflected signal RL. For illustrative purposes, the predetermined period of time TR is represented by a waveform of a duration labeled TR. A period of time during which the reflected signal RL arrives at the ToF sensor 130 may fall within the predetermined period of time TR. In other words, the ToF sensor 130 can capture signal information corresponding to a complete pulse period T, which is generated in response to reflection of a single pulse on the target object 102. The pulse period T as used herein refers to a pulse period of the pulsed light signal EL. For example, the predetermined period of time TR can be set to be longer than or equal to two times the pulse period T. As a result, the sampling result can indicate reflection information corresponding to a complete pulse which is generated from the pulse generator unit 110.

In some embodiments, the control circuit 120 can be configured to, before arrival of the reflected signal RL at the ToF sensor 130, control the ToF sensor 130 to start performing the signal sampling operation according to the sampling period, or according to a sampling frequency which is a reciprocal of the sampling period. For example, before arrival of the reflected signal RL at the ToF sensor 130, the ToF sensor 130 can perform the signal sampling operation once each time the sampling period has elapsed, and stop performing the signal sampling operation when the predetermined period of time TR has elapsed. As the predetermined period of time TR can be set to be longer than or equal to two times the pulse period T, the ToF sensor 130 can capture signal information corresponding to a complete pulse period T within the predetermined period of time TR, wherein the signal information corresponding to the complete pulse period T is generated in response to reflection of a single pulse on the target object 102.

In some embodiments, after a period of time has elapsed since the pulse generator unit 110 sent a pulse, the control circuit 120 can be configured to control the ToF sensor 130 to start performing the signal sampling operation according to the sampling period. The period of time may be shorter than or equal to half the pulse period T. For example, the period of time may be equal to a quarter of the pulse period T, or even equal to zero. In other words, the ToF sensor 130 may start performing the signal sampling operation at a time when the pulse generator unit 110 is sending a pulse.

In some examples, after a period of time has elapsed since the pulse generator unit 110 sent a pulse, the ToF sensor 130 may start to perform the signal sampling operation once each time the sampling period has elapsed, and stop performing the signal sampling operation when the predetermined period of time TR has elapsed. In some other examples, while the pulse sent by the pulse generator unit 110 is falling, the control circuit 120 can control the ToF sensor 130 to start performing the signal sampling operation according to the sampling period. Similarly, as the predetermined period of time TR can be set to be longer than or equal to two times the pulse period T, the ToF sensor 130 can capture signal information corresponding to a complete pulse period T within the predetermined period of time TR, wherein the signal information corresponding to the complete pulse period T is generated in response to reflection of the pulse on the target object 102.

In some embodiments, when the pulse generator unit 110 starts to send a pulse, the control circuit 120 may control the ToF sensor 130 to start performing the signal sampling operation according to the sampling period. As a result, even if a distance between the target object 102 and the distance measuring system 100 is very short, the ToF sensor 130 can still capture signal information corresponding to a complete pulse period T within the predetermined period of time TR, wherein the signal information corresponding to the complete pulse period T is generated in response to reflection of the pulse on the target object 102.

Additionally, in some embodiments, a time difference between a time when the pulse generator unit 110 starts sending a pulse and a time when the ToF sensor 130 starts performing the signal sampling operation can be controlled by the control circuit 120 to be shorter than the pulse period T. As a result, in a case where the predetermined period of time TR can be set to be longer than or equal to two times the pulse period T, the ToF sensor 130 can capture signal information corresponding to a complete pulse period T within the predetermined period of time TR, wherein the signal information corresponding to the complete pulse period T is generated in response to reflection of the pulse on the target object 102.

After performing the signal sampling operation multiple times to generate the sampling result, the ToF sensor 130 can be configured to calculate a phase shift between the reflected signal RL and the pulsed light signal EL sent from the pulse generator unit 110 according to the sampling result. For example, the ToF sensor 130 may include, but is not limited to, a pixel array 132 and a processing circuit 134. The pixel array 132 includes a plurality of pixels (not shown in FIG. 1), wherein each of the pixels may include a light sensor (not shown in FIG. 1) configured to generate a photo response signal in response to the reflected signal RL. The control circuit 120 can enable a light sensor of each pixel to selectively output a corresponding photo response signal to the processing circuit 134.

The processing circuit 134 can be configured to, over the predetermined period of time TR, sample an output of each pixel (e.g. a photo response signal of each pixel) once each time the sampling period has elapsed according to the sample control signal SC, and accordingly generate a sampling result SR. The sample control signal SC can be generated from the control circuit 120. Next, the processing circuit 134 can be configured to perform signal processing, such as mixing operations or discrete Fourier transforms, on the sampling result SR to calculate a phase shift between the reflected signal RL received by each pixel (a receiver side) and the pulsed light signal EL sent from the pulse generator unit 110 (a transmitter side), thereby detecting the time of flight of the pulsed light signal EL. The processing circuit 134 can also calculate a distance between each pixel and the target object 102 according to the time of flight.

For example, a single pulse of the pulsed light signal EL can be represented as a superposition of sinusoidal waves with the use of Fourier series expansion. A reciprocal of the pulse period T of the pulsed light signal EL serves as a fundamental frequency. A distance di between the pixel Pi and the target object 102 can be expressed by Equation (1) as follows:

$$di = (c\Delta\Phi)/(4\pi fi) \qquad\qquad \text{Equation (1)}$$

where c represents speed of light, $\Delta\Phi$ represents a phase shift between the reflected signal RL and the pulsed light signal EL, fi represents a frequency of a sinusoidal wave such as a fundamental wave or a harmonic wave. In some embodiments where the sampling period is set to a quarter of the pulse period T, the processing circuit 134 can sample an output of each pixel in the pixel array 132 once each time a quarter of the pulse period T has elapsed. As a result, the processing circuit 134 can obtain four sampling results $SRi_1$, $SRi_2$, $SRi_3$, and $SRi_4$ of the reflected signal RL associated with the pixel Pi. When compared with the pulsed light signal EL, the sampling results $SRi_1$, $SRi_2$, $SRi_3$, and $SRi_4$ are respective sampling results of a 0° phase delayed version of the reflected signal RL, a 90° phase delayed version of the reflected signal RL, a 180° phase delayed version of the reflected signal RL, and a 270° phase delayed version of the reflected signal RL. As a result, the phase shift $\Delta\Phi$, also referred to as a phase difference, between the reflected signal RL and the pulsed light signal EL can be calculated according to Equation (2) as follows:

$$\Delta\Phi = \arctan((SRi2 - SRi4)/(SRi3 - SRi1)) \qquad\qquad \text{Equation (2)}$$

where arctan represents the inverse of the tangent function. By calculating the phase shift $\Delta\Phi$, the processing circuit 134 can obtain the distance di between the pixel Pi and the target object 102.

Based on the above operation, the processing circuit 134 can perform a signal sampling operation upon an output of each pixel in the pixel array 132 once each time a quarter of the pulse period T has elapsed, thereby obtaining respective data sets of four output images. The data sets include a sampling result of a 0° phase delayed version, a sampling result of a 90° phase delayed version, a sampling result of a 180° phase delayed version, and a sampling result of a 270° phase delayed version of each pixel, respectively. The processing circuit 134 can obtain depth image information by calculating a distance between each pixel and the target object 102 according to the data sets of the four output images.

It is worth noting that, in some embodiments where the distance measuring system 100 is used to implement other types of ToF based distance measuring system, the light sensor described above can be implemented using other types of sensors, such as an acoustic sensor or a radar sensor, to generate a corresponding response signal. Additionally, in the present embodiment, a distance between the pulse generator unit 110 and each pixel may be much shorter than a distance between the pulse generator unit 110 and the target object 102, and much shorter than a distance between each pixel and the target object 102. As a result, regarding a pixel, time of flight of the pulsed light signal EL traveling from the pulse generator unit 110 to the target object 102 may be regarded as equal to time of flight of the reflected signal RL traveling from the target object 102 to the pixel. The processing circuit 134 may therefore measure a distance between the target object 102 and the pixel according to the time of flight and a velocity of the pulsed light signal EL.

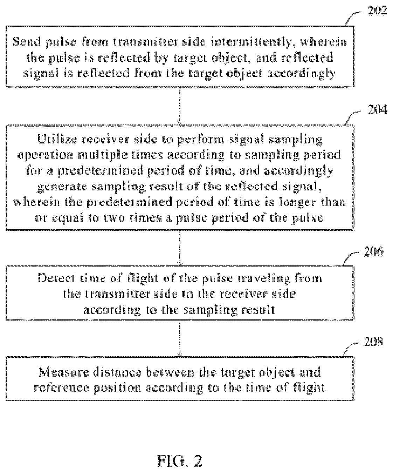

A ToF based distance measuring method employed in the distance measuring system 100 may be summarized in FIG. 2. FIG. 2 is a flow chart of an exemplary ToF based distance measuring method in accordance with some embodiments of the present disclosure. The distance measuring method shown in FIG. 2 may be employed in various types of ToF based distance measuring systems or various types of ToF based systems, such a 3D imaging system. For illustrative purposes, the distance measuring method shown in FIG. 2 is described below with reference to the distance measuring system 100 shown in FIG. 1. However, the distance measuring method shown in FIG. 2 can be employed in other ToF based systems without departing from the scope of the present disclosure. The distance measuring method shown in FIG. 2 may be summarized below.

Step 202: Send a pulse from a transmitter side intermittently, wherein the pulse is reflected by a target object, and a reflected signal is reflected from the target object accordingly. For example, the control circuit 120 may control the pulse generator unit 110 to intermittently send a pulse such as the pulsed light signal EL. After the pulse generator unit 110 sends the pulse, the control circuit 120 may control the pulse generator unit 110 to stop sending pulses until a period of time has elapsed. When the period of time has elapsed, the pulse generator unit 110 can be activated again by the control circuit 120 to send another pulse. The period of time may be longer or much longer than the pulse period T of a single pulse. In addition, the target object 102 can reflect the pulsed light signal EL to generate the reflected signal RL.

Step 204: Utilize a receiver side to perform a signal sampling operation multiple times according to a sampling period for a predetermined period of time, and accordingly generate a sampling result of the reflected signal.

As the predetermined period of time is longer than or equal to two times the pulse period of the pulse, the receiver side can sample the reflected signal multiple times within the predetermined period of time. The sampling result can carry signal information which is generated in response to reflection of a complete pulse on the target object. For example, before the reflected signal RL arrives at the ToF sensor 130, the control circuit 120 can control the ToF sensor 130 to start performing the signal sampling operation according to the sampling period, and stop performing the signal sampling operation when the predetermined period of time TR has elapsed. As another example, after a period of time has elapsed since the pulse generator unit 110 sent a pulse, the control circuit 120 can control the ToF sensor 130 to start performing the signal sampling operation according to the sampling period, and stop performing the signal sampling operation when the predetermined period of time TR has elapsed. The period of time may be shorter than or equal to half the pulse period T. As another example, while the pulse generator unit 110 is starting sending a pulse, the ToF sensor 130 can start performing the signal sampling operation according to the sampling period, and stop performing the signal sampling operation when the predetermined period of time TR has elapsed. As another example, the ToF sensor 130 can start performing the signal sampling operation at a time one pulse period T earlier or later than a time when the pulse generator unit 110 is starting sending a pulse. The ToF sensor 130 can stop performing the signal sampling operation when the predetermined period of time TR has elapsed.

Step 206: Detect time of flight of the pulse traveling from the transmitter side to the receiver side according to the sampling result. For example, in a case where the ToF sensor 130 (or the processing circuit 134) performs the signal sampling operation on an output of each pixel in the pixel array 132 once each time a quarter of the pulse period T has elapsed, the ToF sensor 130 (or the processing circuit 134) can obtain respective data sets of four output images. The data sets include a sampling result of a 0° phase delayed version, a sampling result of a 90° phase delayed version, a sampling result of a 180° phase delayed version, and a sampling result of a 270° phase delayed version of the reflected signal RL associated with each pixel, respectively. Next, the processing circuit 134 can calculate a phase shift between the reflected signal RL and the pulsed light signal EL according to the data sets of the four output images, thereby detecting the time of flight of the pulsed light signal EL (a single pulse).

Step 208: Measure a distance between the target object and a reference position according to the time of flight. The reference position may be, but is not limited to, a position of the transmitter side, a position of the receiver side, a position of an electronic device including the transmitter side and the receiver side, or a reference position which can be defined according to a positional relationship between the transmitter side, the receiver side and the target object. For example, in some embodiments where the distance between the pulse generator unit 110 and each pixel of the pixel array 132 is much shorter than the distance between the pulse generator unit 110 and the target object 102, and much shorter than the distance between each pixel and the target object 102, the ToF sensor 130 (or the processing circuit 134) may measure the distance between the target object 102 and each pixel according to the time of flight of the pulsed light signal EL (a single pulse).

In some embodiments, in step 204, the predetermined period of time may be set to N times the pulse period of the pulse, where N is a positive integer greater than or equal to two. However, this is not intended to limit the scope of the present disclosure. In some embodiments, N may be set to a real number, such as 2.5, without departing from the scope of the present disclosure.

In some embodiments, besides a photo response signal generated from a light sensor in response to the reflected signal RL, a sampling result of each pixel may include a reference signal generated without reference to the reflected signal RL. For example, the step of generating the sampling result of the reflected signal (step 204) may include: outputting a reference signal without reference to the reflected signal RL while outputting a photo response signal of a pixel, and subtracting the reference signal from the photo response signal to thereby produce the sampling result of the pixel. Noise and interference in the surroundings imposed on the sampling result can therefore be reduced.

Further, in some embodiments, a photo response signal of a light sensor can be outputted from two transmission paths. Each transmission path is configured to receive and transmit the photo response signal when turned on, and generate a reference signal when turned off. The respective on/off timings of the two transmission paths can be controlled by two control signals having different phases, respectively. As a result, the proposed ToF based distance measuring scheme can simulate a CW modulation sensing mechanism by modulating transmitted light according to consecutive pulses which are sent intermittently.

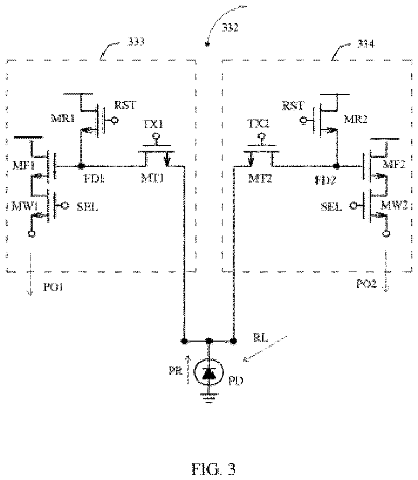

For illustrative purposes, the proposed ToF based distance measuring scheme is described with reference to some exemplary pixel circuits in the following embodiments. However, this is not meant to be limitations of the present disclosure. Any pixel circuits capable of utilizing the distance measuring method shown in FIG. 2 to detect time of flight can be used without departing from the scope of the present disclosure. Referring to FIG. 3, an exemplary circuit structure of a pixel in the pixel array 132 shown in FIG. 1 is illustrated in accordance with an embodiment of the present disclosure. In the present embodiment, the pixel 332 includes, but is not limited to, a light sensor PD, a first readout circuit (e.g. a photoelectric readout circuit) 333 and a second readout circuit (e.g. a photoelectric readout circuit) 334. The light sensor PD, such as a photodiode, is configured to perform light sensing. For example, the light sensor PD may sense the reflected signal RL to generate a photo response signal PR, wherein the photo response signal PR may be outputted from at least one of the first readout circuit 333 (e.g. a first transmission path) and the second readout circuit 334 (e.g. a second transmission path). In some embodiments, the light sensor PD can convert a received light signal to a photocurrent signal. As a result, the photo response signal PR may be a current signal indicative of a signal level of a light signal. The first readout circuit 333 and/or the second readout circuit 334 can be configured to read out the photocurrent signal.

The first readout circuit 333 can selectively transmit the photo response signal PR generated from the light sensor PD according to a first control signal TX1, thereby generating a first pixel output PO1. The first control signal TX1 may be provided by the control circuit 120 shown in FIG. 1. In other words, the pixel 332 may selectively transmit the photo response signal PR to the processing circuit 134 through the first transmission path according to the first control signal TX1, generate the first pixel output PO1 accordingly and output the first pixel output PO1 to the processing circuit 134. The second readout circuit 334 can selectively transmit the photo response signal PR generated from the light sensor PD according to a second control signal TX2, thereby generating a second pixel output PO2. The second control signal TX2 may be provided by the control circuit 120 shown in FIG. 1, and have a phase different from that of the first control signal TX1. The pixel 332 may selectively transmit the photo response signal PR to the processing circuit 134 through the second transmission path according to the second control signal TX2, generate the second pixel output PO2 accordingly and output the second pixel output PO2 to the processing circuit 134. In the present embodiment, the first control signal TX1 and the second control signal TX2 can be provided by the control circuit 120 shown in FIG. 1.

It is worth noting that, with the use of the first readout circuit 333 and the second readout circuit 334, the photo response signal PR of the light sensor PD can be sent to the processing circuit 134 without interruption for a period of time, i.e. the predetermined period of time TR. As a result, the processing circuit 134 can sample signal information, carried by the reflected signal RL over a complete pulse period T, within the period of time.

For example, the predetermined period of time TR may include a first sampling interval and a second sampling interval adjacent to each other. During each sampling interval of the first sampling interval and the second sampling interval, the first readout circuit 333 can selectively transmit the photo response signal PR according to the first control signal TX1, and the second readout circuit 334 can selectively transmit the photo response signal PR according to the second control signal TX2. At least one of the first readout circuit 333 and the second readout circuit 334 can be utilized for transmitting the photo response signal PR. As a result, in some embodiments where a duration of the sampling interval is equal to the pulse period T, a period of time during which the processing circuit 134 continuously transmits the photo response signal PR, i.e. the predetermined period of time TR, can be longer than or equal to two times the pulse period T. In addition, during the sampling interval, the processing circuit 134 can sample the first pixel output PO1 and the second pixel output PO2 once each time a sampling period has elapsed. At each sampling time point when the first pixel output PO1 and the second pixel output PO2 are sampled, the processing circuit 134 may perform associated signal processing, such as signal subtraction, upon the first pixel output PO1 and the second pixel output PO2 to generate the sampling result SR. When utilized to transmit the photo response signal PR, the first readout circuit 333 can sample the photo response signal PR to generate the first pixel output PO1. When utilized to transmit the photo response signal PR, the second readout circuit 334 can sample the photo response signal PR to generate the second pixel output PO2. As a period of time during which the reflected signal RL arrives at the light sensor PD is equal to substantially equal to the pulse period T, and may fall within the predetermined period of time TR (longer than or equal to two times the pulse period T), the processing circuit 134 can sample signal information which is carried by the reflected signal RL over a complete pulse period T.

In the present embodiment, the first readout circuit 333 may include, but is not limited to, a first reset transistor MR1, a first transfer transistor MT1, a first output transistor MF1 and a first readout transistor MW1. The second readout circuit 334 may include, but is not limited to, a second reset transistor MR2, a second transfer transistor MT2, a second output transistor MF2 and a second readout transistor MW2. The first reset transistor MR1 and the second reset transistor MR2 are configured to reset a first floating diffusion node FD1 and a second floating diffusion node FD2, respectively, according to a reset signal RST. The reset signal RST may be provided by the control circuit 120 shown in FIG. 1. The first transfer transistor MT1 and the second transfer transistor MT2, each of which is coupled to the light sensor PD, may be turned on according to the first control signal TX1 and the second control signal TX2 respectively. In other words, the first transfer transistor MT1 and the second transfer transistor MT2 are controlled by the first control signal TX1 and the second control signal TX2, respectively, to be connected to and disconnected from the light sensor PD. Also, regarding each sampling operation performed over each sampling period in the predetermined period of time TR, at least one of the first floating diffusion node FD1 and the second floating diffusion node FD2 can be connected to the light sensor PD. As a result, during arrival of the reflected signal RL at the light sensor PD, the photo response signal PR can be transmitted to at least one of the first floating diffusion node FD1 and the second floating diffusion node FD2.

The first output transistor MF1 and the second output transistor MF2 are configured to amplify respective voltage signals at the first floating diffusion node FD1 and the second floating diffusion node FD2 respectively, thereby generating the first pixel output PO1 and the second pixel output PO2 respectively. The first readout transistor MW1 and the second readout transistor MW2 are configured to selectively output the first pixel output PO1 and the second pixel output PO2, respectively, according to a select signal SEL. The select signal SEL may be provided by the control circuit 120 shown in FIG. 1. During each sampling interval in the predetermined period of time TR, the first readout transistor MW1 and the second readout transistor MW2 may be turned on according to the select signal SEL, thereby outputting the first pixel output PO1 and the second pixel output PO2 respectively. It is worth noting that, as the photo response signal PR can be transmitted to at least one of the first floating diffusion node FD1 and the second floating diffusion node FD2 during arrival of the reflected signal RL at the light sensor PD, at least one of the first pixel output PO1 and the second pixel output PO2, sampled by the processing circuit 134 during arrival of the reflected signal RL at the light sensor PD, can include information on the photo response signal PR.

In some embodiments, in addition to the photo response signal PR generated in response to the reflected signal RL, one of the first pixel output PO1 and the second pixel output PO2 may include a reference signal generated without reference to the reflected signal RL. Each time the first pixel output PO1 and the second pixel output PO2 are sampled, the processing circuit 134 may subtract one of the first pixel output PO1 and the second pixel output PO2 from the other to generate the sampling result SR, thereby reducing noise and interference in the surroundings imposed on the sampling result SR. For example, in a sampling operation during arrival of the reflected signal RL at the light sensor PD, the second readout circuit 334 is utilized to transmit the photo response signal PR (e.g. the second transfer transistor MT2 is turned on) to sense the reflected signal RL to thereby generate the second pixel output PO2. The first readout circuit 333 is not utilized to transmit the photo response signal PR (e.g. the first transfer transistor MT1 is turned off). As the first readout transistor MW1 may still be turned on according to the select signal SEL, the first pixel output PO1 can serve as a first reference signal carrying noise information associated with the sampling operation when the first transfer transistor MT1 is turned off. The processing circuit 134 can subtract one of the first pixel output PO1 and the second pixel output PO2 from the other to reduce noise and interference in the surroundings imposed on the sampling result SR.

In other words, during each sampling interval included in the predetermined period of time TR, the first readout circuit 333 may generate the first reference signal when not utilized to transmit the photo response signal PR. The first reference signal can serve as the first pixel output PO1. An output of the second readout circuit 334 is a sampled signal coming from the light sensor PD. During each sampling interval included in the predetermined period of time TR, the second readout circuit 334 may generate a second reference signal when not utilized to transmit the photo response signal PR. The second reference signal can serve as the second pixel output PO2. An output of the first readout circuit 333 is a sampled signal coming from the light sensor PD. Each of the first reference signal and the second reference signal carries noise information associated with the sampling operation. The processing circuit 134 shown in FIG. 1 may subtract one of the first pixel output PO1 and the second pixel output PO2 from the other (e.g. subtracting a noise signal from a sampled signal coming from the light sensor PD) to generate the sampling result SR, thereby reducing noise and interference in the surroundings imposed on the sampling result SR.

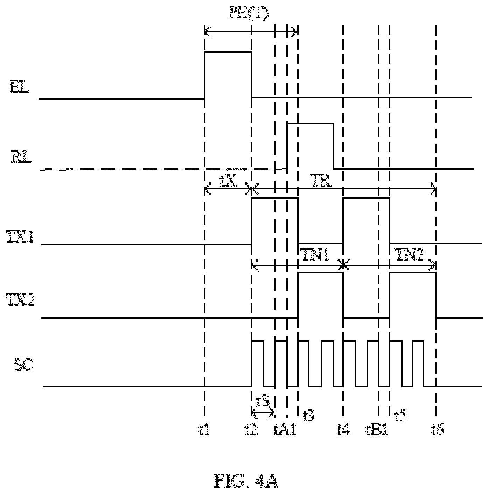

FIG. 4A is a timing diagram illustrating signal waveforms associated with the pixel 332 shown in FIG. 3 in accordance with an embodiment of the present disclosure. Referring to FIG. 1, FIG. 3 and FIG. 4, at time t1, the pulse generator unit 110 may send a pulse PE which serve as the pulsed light signal EL. The pulse PE has the pulse period T. Before arrival of the reflected signal RL at the pixel 332, i.e. before time tA1, the control circuit 120 can control the processing circuit 134 to start performing a signal sampling operation on an output of the pixel 332 (the first pixel output PO1 and the second pixel output PO2) according to a sampling period tS, thereby generating the sampling result SR of the reflected signal RL. It is worth noting that although the following is described with reference to signal sampling operations of a single pixel, a sampling result obtained by the processing circuit 134 at each sampling time point includes respective sampling results of a plurality of pixels in the pixel array 132, wherein a time interval between two consecutive sampling time points is equal to a sampling period tS. In other words, the processing circuit 134 can obtain data sets of output images of the entire pixel array 132 at each sampling time point.

In the present embodiment, after a period of time tX has elapsed (at time t2) sine the pulse generator unit 110 sent the pulse PE (at time t1), the pixel 332 can start transmitting the photo response signal PR of the light sensor PD to the processing circuit 134 through at least one of the first readout circuit 333 and the second readout circuit 334. The period of time tX can be set to, but is not limited to, half the pulse period T. For example, while the pulse PE is falling (at time t2), the control circuit 120 can control the pixel 332 to start performing a signal sampling operation according to the sampling period tS. In addition, at time t2, the processing circuit 134 can start sampling the first pixel output PO1 and the second pixel output PO2 once every sampling period tS according to the sampling control signal SC. As a period of time over which the signal sampling operation performed according to the sampling period tS continues (i.e. the predetermined period of time TR) may be set to two times the pulse period T, a period of time during which the reflected signal RL arrives at the pixel 332 (i.e. a period of time between time tA1 and time tB2 which is equivalent to a pulse period T) can fall within the predetermined period of time TR. As a result, during arrival of the reflected signal RL at the pixel 332, the photo response signal PR of the light sensor PD can be continuously transmitted to the processing circuit 134 through the first readout circuit 333 or the second readout circuit 334. This allows the processing circuit 134 to perform the signal sampling operation upon a pixel output multiple times, wherein the pixel output is generated in response to the photo response signal PR. Accordingly, the processing circuit 134 can obtain signal information carried by the reflected signal RL over a complete pulse period T.

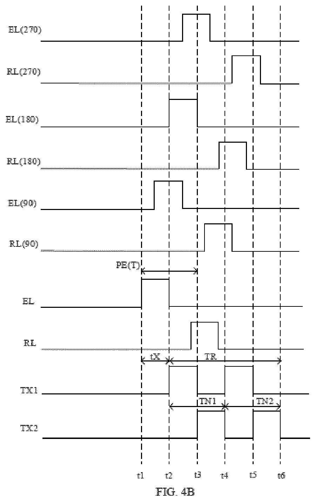

For example, the sampling period tS may be a quarter of the pulse period T. During arrival of the reflected signal RL at the pixel 332, the processing circuit 134 may perform the signal sampling operation on the first pixel output PO1 or the second pixel output PO2 four times. These four sampling operations may reflect signal information on four phases (e.g. 0, $\pi/2$, $\pi$ and $3\pi/2$) of the reflected signal RL in a pulse period T. FIG. 4B is a diagram illustrating respective sampling results of a 0° phase delayed version of the reflected signal RL, a 90° phase delayed version of the reflected signal RL, a 180° phase delayed version of the reflected signal RL, and a 270° phase delayed version of the reflected signal RL, which are obtained in the processing circuit 134 shown in FIG. 1 by referring to a quarter of the pulse period T to perform the signal sampling operation. In the embodiment shown in FIG. 4B, RL, RL(90), RL(180) and RL(270) can represent respective signal waveforms of a 0° phase delayed version, a 90° phase delayed version, a 180° phase delayed version and a 270° phase delayed version of a reflected signal, respectively. Also, EL, EL(90), EL(180) and EL(270) can represent respective signal waveforms of a 0° phase delayed version, a 90° phase delayed version, a 180° phase delayed version and a 270° phase delayed version of a pulsed light signal, respectively. As shown in FIG. 4B, the processing circuit 134 can obtain respective sampling results of the 0° phase delayed version, the 90° phase delayed version, the 180° phase delayed version and the 270° phase delayed version of the reflected signal RL within a complete pulse period T.

However, the above examples are not intended to limit the scope of the present disclosure. Different sampling periods may be used for the signal sampling operation. For example, the sampling period tS may be one eighth or one sixteenth of the pulse period T. The corresponding sampling result may include respective results of eight/sixteen sampling operations which are performed at eight/sixteen phases in a pulse period T, respectively. As another example, the sampling period tS may be one Mth of the pulse period T, wherein M is a positive integer greater than one. It is worth noting that the larger the number of phases corresponding to the sampling result is (i.e. the larger the M is), the higher the harmonic order of the sampling result eliminated using mixing operations and discrete Fourier transforms can be.

The accuracy of phase shift information or baseband information can be enhanced accordingly. As the phase shift information corresponds to a result of ToF measurement, the accuracy of the ToF measurement can be enhanced.

Referring again to FIG. 1, FIG. 3 and FIG. 4A, the predetermined period of time TR may include a first sampling interval TN1 (i.e. a period of time between time t2 and time t4) and a second sampling interval TN2 (i.e. a period of time between time t4 and time t6) adjacent to each other. A duration of each sampling interval is equal to the pulse period T. A waveform of the first control signal TX1 occurring during the first sampling interval TN1 is identical to a waveform of the first control signal TX1 occurring during the second sampling interval TN2. As a result, the first transfer transistor MT1 is turned on at time t2, turned off at time t3, turned on again at time t4, and turned off again at time t5. The second control signal TX2 and the first control signal TX1 may have a phase difference of 180 degrees, such that the second transfer transistor MT2 is turned on at time t3, turned off at time t4, turned on again at time t5, and turned off again at time t6. As a result, between time tA1 and time t3, the first pixel output PO1 corresponds to the photo response signal PR, generated from the light sensor PD in response to the reflected signal RL, while the second pixel output PO2 is a corresponding reference signal. Such reference signal is a signal that is outputted from the second readout transistor MW2 when the second readout circuit 334 does not receive the photo response signal PR outputted from the light sensor PD. This reference signal may carry noise information produced when the pixel 332 samples the reflected signal RL. Between time t3 and time t4, the second pixel output PO2 corresponds to the photo response signal PR, generated from the light sensor PD in response to the reflected signal RL, while the first pixel output PO1 is a corresponding reference signal. This reference signal, carrying noise information produced when the pixel 332 samples the reflected signal RL, is a signal that is outputted from the first readout transistor MW1 when the first readout circuit 333 does not receive the photo response signal PR outputted from the light sensor PD. Similarly, between time t4 and time tB1, the first pixel output PO1 corresponds to the photo response signal PR, generated from the light sensor PD in response to the reflected signal RL, while the second pixel output PO2 is a corresponding reference signal.

The processing circuit 134 may generate the sampling result SR of the pixel 332 according to the first pixel output PO1 and the second pixel output PO2. For example, each time the first pixel output PO1 and the second pixel output PO2 are sampled, the processing circuit 134 may subtract one of the first pixel output PO1 and the second pixel output PO2 from the other and accordingly generate the sampling result SR of the pixel 332. Noise and interference imposed on the sampling result SR can therefore be reduced.

As the pixel 332 may sense the reflected signal RL to generate the photo response signal PR within a period of time during which the reflected signal RL arrives at the pixel 332 (e.g. a period of time equivalent to the pulse period T), and the processing circuit 134 can sample once the first pixel output PO1 or the second pixel output PO2 generated from each pixel each time the sampling period tS (e.g. one eighth of a pulse period, or T/8) has elapsed, the ToF sensor 130 may perform the signal sampling operation multiples times upon an output of the pixel 332 for the predetermined period of time TR, thereby obtaining signal information on the reflected signal RL in a complete pulse period T.

It is worth noting that, by performing associated signal processing (e.g. signal processing including mixing operations and discrete Fourier transforms) on the corresponding sampling result SR during arrival of the reflected signal RL at the pixel 332, the processing circuit 134 may obtain information on a phase shift between the pulsed light signal EL and the reflected signal RL. The information may be identical/similar to that obtained using CW modulation. For example, the processing circuit 134 may generate a mixing result by performing a mixing operation on the pulsed light signal EL and the sampling result SR (e.g. a result of subtraction of the first pixel output PO1 and the second pixel output PO2) corresponding to each signal sampling operation, perform a discrete Fourier transform on the mixing result, and obtain phase shift information (e.g. baseband information) according to a result of the discrete Fourier transform. In this way, by sending a single pulse intermittently, and performing a signal sampling operation multiple times at a receiver side for a predetermined period of time (e.g. a duration equal to two times the pulse period of the single pulse), the proposed ToF based distance measuring scheme can obtain signal information on a reflected signal in a complete pulse period, achieve effects similar to those obtained using CW modulation, and have good measurement quality.

It is worth noting that an existing measurement technique utilizing CW modulation has to send a plurality of light signals continuously and sample a reflected signal during a plurality of consecutive signal periods in order to obtain phase shift information. In contrast, the proposed ToF based distance measuring scheme can obtain phase shift information by sending a single light pulse intermittently and performing sampling operation for at least two pulse periods, rather than sending a plurality of light signal continuously and sampling a reflected signal during a plurality of consecutive signal periods. In addition, as instantaneous power of a light pulse is much higher than energy from ambient light, the proposed ToF based distance measuring scheme can greatly reduce effects of the ambient light upon a detection result. Further, as the proposed ToF based distance measuring scheme sends a single light pulse from a transmitter side intermittently, a period of time taken to send the single light pulse is quite short when compared with a time interval between two consecutive light pulses. This means that the average power of the proposed ToF based distance measuring scheme is quite low. In other words, the proposed ToF based distance measuring scheme can achieve low power consumption, rapidly measure a distance to a target object, and maintain good measurement quality.

The above is provided for illustrative purposes, and is not intended to limit the scope of the present disclosure.

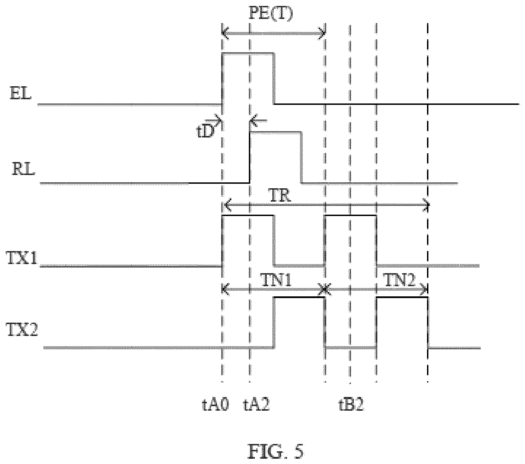

In some embodiments, a time at which the ToF sensor 130 starts performing the signal sampling operation may be equal to, or substantially equal to, a time at which the pulse generator unit 110 starts sending the pulse PE. FIG. 5 illustrates a timing diagram illustrating signal waveforms associated with the pixel 332 shown in FIG. 3 in accordance with another embodiment of the present disclosure. Referring to FIG. 1, FIG. 3 and FIG. 5, in the present embodiment, as the distance between the target object 102 and the pixel 332 is relatively short, a difference between a time when the pulsed light signal EL is sent and a time when the reflected signal RL is received (i.e. a time delay tD2) would be relatively short, e.g. one fourth of the pulse period T. While the pulse generator unit 110 is starting sending the pulse PE (at time tA0), the control circuit 120 can control the pixel 332 to start performing the signal sampling operation. As a result, a period of time during which the reflected signal RL arrives at the pixel 332 (e.g. a period of time between time tA2 and time tB2 which is equivalent to a pulse period T) may still fall within the predetermined period of time TR. This allows the processing circuit 134 to perform the signal sampling operation multiple times on a pixel output which is generated in response to the photo response signal PR. The processing circuit 134 can obtain signal information carried by the reflected signal RL in a complete pulse period T. In some embodiments, the predetermined period of time TR may be set to be longer than two times the pulse period T. For example, the predetermined period of time TR may be set to three times the pulse period T. As a result, even if a distance between the target object 102 and the pixel 332 increases to a maximum measurable distance of the distance measuring system 100, the processing circuit 134 can obtain signal information carried by the reflected signal RL in a complete pulse period T.

In some embodiments, the pixel array 132 shown in FIG. 1 may employ shared pixel architecture to save chip area. In some embodiments, the readout circuit shown in FIG. 3 may be implemented using other circuit structures. In some embodiments, the first readout circuit 333 or the second readout circuit 334 of the pixel 332 shown in FIG. 3 may be optional. For example, each of the pixel 332 and an adjacent pixel may have a single readout circuit. The respective on/off timings of the respective readout circuits of the pixel 332 and the adjacent pixel can be controlled by two control signals having different phases, respectively. The processing circuit 134 shown in FIG. 1 can simulate a CW modulation sensing mechanism by performing signal processing on two adjacent pixels. As long as phase shift information can be generated by intermittently sending a single pulse, and continuously performing a signal sampling operation for a period of time including a period during which a reflected signal arrives at a receiver side (e.g. a period of time longer than or equal to two times the pulse period), associated modifications and alternatives fall within the spirit and scope of the present disclosure.

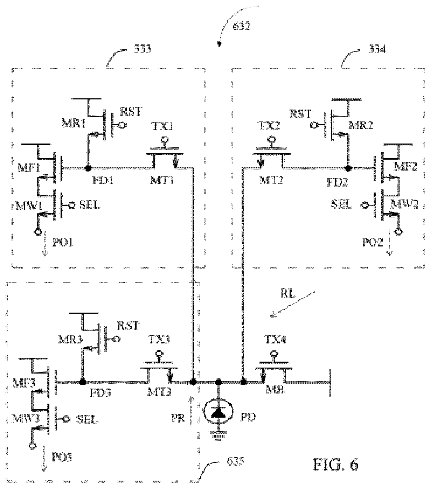

FIG. 6 is a diagram illustrating an exemplary circuit structure of a pixel in the pixel array 132 shown in FIG. 1 in accordance with another embodiment of the present disclosure. The pixel 632 shown in FIG. 6 is similar/identical to the pixel 332 shown in FIG. 3 except that the pixel 632 further includes a third readout circuit 635, which is provided for further reducing effects of ambient information/noise upon the measurement quality. In the present embodiment, the third readout circuit 635 includes, but is not limited to, a third transfer transistor MT3, a third reset transistor MR3, a third output transistor MF3 and a third readout transistor MW3. The third transfer transistor MT3, coupled to the light sensor PD, is turned on according to a third control signal TX3, which can be provided by the control circuit 120 shown in FIG. 1. The third reset transistor MR3 is configured to reset a third floating diffusion node FD3 according to the reset signal RST. The third output transistor MF3 is configured to amplify a voltage signal at the third floating diffusion node FD3, and accordingly generate a third pixel output PO3. The third readout transistor MW3 is configured to selectively output the third pixel output PO3 according to the select signal SEL.

In addition, the pixel 632 may include an anti-blooming transistor MB. The anti-blooming transistor MB is configured to extract photoelectrons, which are generated from the light sensor PD in response to reception of ambient light, to reduce/minimize undesirable effects of the photoelectrons upon the circuit operation. For example, the photoelectrons may be transferred to a power source. The anti-blooming transistor MB may be turned on according to a fourth control signal TX4, which may be provided by the control circuit 120 shown in FIG. 1.

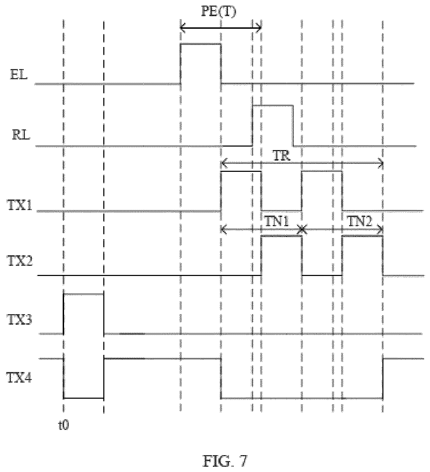

Referring to FIG. 6 and FIG. 7, signal waveforms associated with the pixel 632 shown in FIG. 6 are illustrated in FIG. 7 in accordance with an embodiment of the present disclosure. The timing diagram shown in FIG. 7 is similar/identical to that shown in FIG. 4A except that the third transfer transistor MT3 can be turned on according to the third control signal TX3 (at time t0) before the pulse generate unit 110 shown in FIG. 1 sends the pulse PE. Accordingly, the third pixel output PO3, generated from the light sensor PD in response to reception of ambient light, can be provided for the processing circuit 134 shown in FIG. 1. As a result, when processing a sampling result of the pixel 632 (e.g. a result of subtraction of the first pixel output PO1 and the second pixel output PO2), the processing circuit 134 shown in FIG. 1 may subtract ambient noise components from the sampling result according to the third pixel output PO3. Additionally, in the present embodiment, during a period of time in which the first transfer transistor MT1, the second transfer transistor MT2 and the third transfer transistor MT3 are turned off, the anti-blooming transistor MB may be turned on according to the fourth control signal TX4 to thereby extract photoelectrons which are generated from the light sensor PD in response to reception of ambient light. As a result, the ambient light immunity of the pixel 632 can be enhanced.

It is worth noting that the circuit structure shown in FIG. 6 is provided for illustrative purposes, and is not intended to limit the scope of the present disclosure. In some embodiments, it is possible to use one of the third readout circuit 635 and the anti-blooming transistor MB to reduce effects of ambient information/noise upon the measurement quality.

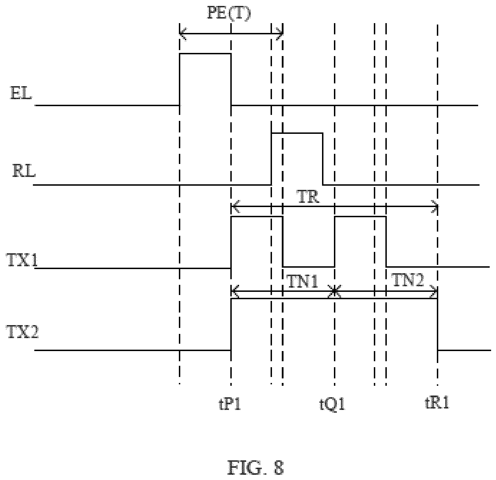

In some embodiments, a phase difference between control signals used for the proposed ToF based distance measuring scheme (e.g. the first control signal TX1 and the second control signal TX2 shown in FIG. 3) is not limited to 180 degrees. FIG. 8 is a timing diagram illustrating signal waveforms associated with the pixel 332 shown in FIG. 3 in accordance with another embodiment of the present disclosure. The timing diagram shown in FIG. 8 is similar/identical to that shown in FIG. 4A except that the second control signal TX2 stays at a high signal level during each of the first sampling period TN1 and the second sampling period TN2. As a result, the second transfer transistor MT2 is turned on during the first sampling period TN1 and the second sampling period TN2. In the present embodiment, between time tP1 and time tQ1 (or between time tQ1 and time tR1), a result of subtracting the first pixel output PO1 (outputted from the first readout circuit 333) from the second pixel output PO2 (outputted from the second readout circuit 334) is substantially identical/similar to the second pixel output PO2 outputted from the second readout circuit 334 during the first sampling period TN1 in the embodiment shown in FIG. 4A. As a result, the signal waveforms in the embodiment shown in FIG. 8 may be used for ToF detection.

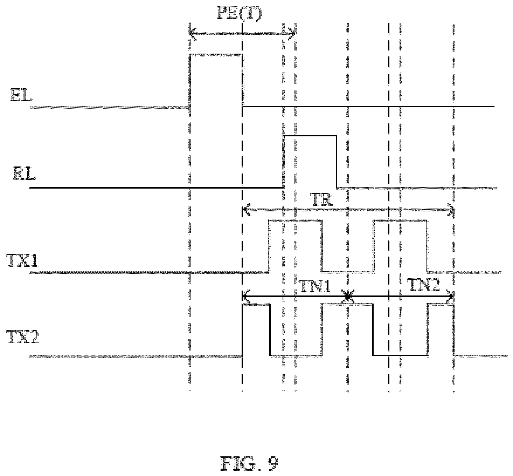

FIG. 9 is a timing diagram illustrating signal waveforms associated with the pixel 332 shown in FIG. 3 in accordance with another embodiment of the present disclosure. Compared with the first control signal TX1 shown in FIG. 4A, the first control signal TX1 shown in FIG. 9 has a phase delay of 90 degrees. Also, the second control signal TX2 and the first control signal TX1 shown in FIG. 9 have a phase difference of 180 degrees. Referring to FIG. 9 and also to FIG. 3, it is worth noting that during arrival of the reflected signal RL at the pixel 332, the pixel 332 can receive signal information on the reflected signal RL in a complete pulse period according to the first control signal TX1 and the second control signal TX2 shown in FIG. 9. As a result, the processing circuit 134 shown in FIG. 1 may still successfully obtain a corresponding sampling result of the reflected signal RL in a complete pulse period.

After reading the above paragraphs directed to FIG. 1 to FIG. 9, those skilled in the art should appreciate that a phase relationship between control signals may be implemented in various ways as long as signal information on the reflected signal RL in a complete pulse period can be sampled. Thus, associated modifications and alternatives are omitted for brevity.

While certain exemplary embodiments have been described and shown in the accompanying drawing, it is to be understood that such embodiments are merely illustrative of and not restrictive on the present disclosure. Those skilled in the art will readily observe that numerous modifications and alterations of the device and method may be made while retaining the teachings of the present disclosure. Those skilled in the art should also realize that such equivalent constructions do not depart from the spirit and scope of the present disclosure, and that they may make various changes, substitutions, and alterations herein without departing from the spirit and scope of the present disclosure.

**Claims**

1. A time-of-flight based distance measuring method, **characterized by** comprising:

   sending a pulse from a transmitter side intermittently, wherein the pulse is reflected by a target object, and a reflected signal is reflected from the target object accordingly;
   utilizing a receiver side to perform a signal sampling operation multiple times according to a sampling period for a predetermined period of time, and accordingly generate a sampling result of the reflected signal, wherein the predetermined period of time is longer than or equal to two times a pulse period of the pulse;
   detecting time of flight of the pulse traveling from the transmitter side to the receiver side according to the sampling result; and
   measuring a distance between the target object and a reference position according to the time of flight.

2. The distance measuring method of claim 1, **characterized in that** the step of utilizing the receiver side to perform the signal sampling operation multiple times according to the sampling period for the predetermined period of time comprises:
   before arrival of the reflected signal at the receiver side, starting performing the signal sampling operation according to the sampling period.

3. The distance measuring method of claim 1, **characterized in that** the step of the step of utilizing the receiver side to perform the signal sampling operation multiple times according to the sampling period for the predetermined period of time comprises:
   after a period of time has elapsed since sending the pulse from the transmitter side, starting performing the signal sampling operation according to the sampling period, wherein the period of time is shorter than or equal to half the pulse period.

4. The distance measuring method of claim 1, **characterized in that** a time difference between a time when the transmitter side starts sending the pulse and a time when the receiver side starts performing the signal sampling operation is shorter than the pulse period.

5. The distance measuring method of claim 1, **characterized in that** the step of utilizing the receiver side to perform the signal sampling operation multiple times according to the sampling period for the predetermined period of time comprises:
while the transmitter is starting sending the pulse, utilizing the receiver side to start performing the signal sampling operation according to the sampling period.

6. The distance measuring method of claim 1, **characterized in that** the step of utilizing the receiver side to perform the signal sampling operation multiple times according to the sampling period for the predetermined period of time comprises:
while the pulse sent from the transmitter is falling, utilizing the receiver side to start performing the signal sampling operation according to the sampling period.

7. The distance measuring method of any one of claims 1-6, **characterized in that** the predetermined period of time comprises a first sampling interval and a second sampling interval, and each of a duration of the first sampling interval and a duration of the second sampling interval is equal to the pulse period; the step of utilizing the receiver side to perform the signal sampling operation multiple times according to the sampling period for the predetermined period of time and accordingly generate the sampling result of the reflected signal comprises:

sensing the reflected signal to generate a response signal;
during each of the first sampling interval and the second sampling interval, generating a first pixel output by selectively utilizing a first transmission path to receive the response signal according to a first control signal, and generating a second pixel output by selectively utilizing a second transmission path to receive the response signal according to a second control signal, wherein the second control signal and the first control signal have different phases, and at least one of the first transmission path and the second transmission path is utilized to receive the response signal; and
sampling the first pixel output and the second pixel output each time the sampling period has elapsed, and accordingly generating the sampling result according to the first pixel output and the second pixel output.

8. The distance measuring method of claim 7, **characterized in that** the step of generating the first pixel output comprises:

when the response signal is received through the first transmission path, sampling the response signal to generate the first pixel output; and
the step of generating the second pixel output comprises:
when the response signal is received through the second transmission path, sampling the response signal to generate the second pixel output.

9. The distance measuring method of claim 8, **characterized in that** the step of generating the first pixel output further comprises:

when the first transmission path is not utilized for receiving the response signal, generating a first reference signal serving as the first pixel output;
the step of generating the second pixel output further comprises:

when the second transmission path is not utilized for receiving the response signal, generating a second reference signal serving as the second pixel output; and the step of generating the sampling result according to the first pixel output and the second pixel output comprises:
each time the first pixel output and the second pixel output are sampled, generating the sampling result by subtracting one of the first pixel output and the second pixel output from the other of the first pixel output and the second pixel output.

10. The distance measuring method of claim 7, **characterized in that** the first control signal and the second control signal have a phase difference of 180 degrees.

**11.** The distance measuring method of claim 7, **characterized in that** a waveform of the first control signal occurring during the first sampling interval is identical to a waveform of the first control signal occurring during the second sampling interval, and a waveform of the second control signal occurring during the first sampling interval is identical to a waveform of the second control signal occurring during the second sampling interval.

**12.** The distance measuring method of any one of claims 1-6, **characterized in that** the sampling period is equal to a quarter of the pulse period.

**13.** A time-of-flight based distance measuring system, **characterized by** comprising:

a pulse generator unit;
a control circuit, coupled to the pulse generator unit, the control circuit being configured to control the pulse generator unit to send a pulse intermittently, wherein the pulse is reflected by a target object and a reflected signal is reflected from the target object accordingly;
a time-of-flight sensor, controlled by the control circuit, the time-of-flight sensor being configured to perform a signal sampling operation multiple times according to a sampling period for a predetermined period of time, and accordingly generate a sampling result of the reflected signal, wherein the predetermined period of time is longer than or equal to two times a pulse period of the pulse; the time-of-flight sensor is further configured to detect time of flight of the pulse traveling from the pulse generator unit to the time-of-flight sensor according to the sampling result, and measure a distance between the target object and the distance measuring system according to the time of flight.

**14.** The distance measuring system of claim 13, **characterized in that** before arrival of the reflected signal at the time-of-flight sensor, the control circuit is configured to control the time-of-flight sensor to start performing the signal sampling operation according to the sampling period.

**15.** The distance measuring system of claim 13, **characterized in that** after a period of time has elapsed since the pulse generator unit sent the pulse, the control circuit is configured to control the time-of-flight sensor to start performing the signal sampling operation according to the sampling period; the period of time is shorter than or equal to half the pulse period.

**16.** The distance measuring system of claim 13, **characterized in that** a time difference between a time when the pulse generator unit starts sending the pulse and a time when the time-of-flight sensor starts performing the signal sampling operation is shorter than the pulse period.

**17.** The distance measuring system of claim 13, **characterized in that** the control circuit is configured to, while the pulse generator unit is starting sending the pulse, control the time-of-flight sensor to start performing the signal sampling operation according to the sampling period.

**18.** The distance measuring system of claim 13, **characterized in that** the control circuit is configured to, while the pulse is falling, control the time-of-flight sensor to start performing the signal sampling operation according to the sampling period.

**19.** The distance measuring system of any one of claims 13-18, **characterized in that** the time-of-flight sensor comprises:

a pixel array, comprising a plurality of pixels, wherein each of the pixels comprises:

a sensor, configured to sense the reflected signal to generate a response signal;
a first readout circuit configured to, during each sampling interval of the first sampling interval and the second sampling interval included in the predetermined period of time, selectively transmit the response signal according to a first control signal generated from the control circuit and accordingly generate a first pixel output, wherein a duration of the sampling interval is equal to the pulse period; and
a second readout circuit configured to, during the sampling interval, selectively transmit the response signal according to a second control signal generated from the control circuit and accordingly generate a second pixel output, wherein the second control signal and the first control signal have different phases, and at least one of the first readout circuit and the second readout circuit is utilized to transmit the response signal during the sampling interval; and

a processing circuit, coupled to the pixel array and the control circuit, the processing circuit being configured to refer to a sample control signal generated from the control circuit to sample the first pixel output and the second pixel output each time the sampling period has elapsed, and accordingly generate the sampling result according to the first pixel output and the second pixel.

20. The distance measuring system of claim 19, **characterized in that** when the first readout circuit is utilized to transmit the response signal during the sampling interval, the first readout circuit is configured to sample the response signal to generate the first pixel output; when the second readout circuit is utilized to transmit the response signal during the sampling interval, the second readout circuit is configured to sample the response signal to generate the second pixel output.

21. The distance measuring system of claim 20, **characterized in that** when the first readout circuit is not utilized for transmitting the response signal during the sampling interval, the first readout circuit is configured to generate a first reference signal serving as the first pixel output; when the second readout circuit is not utilized for transmitting the response signal during the sampling interval, the second readout circuit is configured to generate a second reference signal serving as the second pixel output; and the processing circuit is configured to, each time the first pixel output and the second pixel output are sampled, generate the sampling result by subtracting one of the first pixel output and the second pixel output from the other of the first pixel output and the second pixel output.

22. The distance measuring system of claim 19, **characterized in that** the first control signal and the second control signal have a phase difference of 180 degrees.

23. The distance measuring system of claim 19, **characterized in that** a waveform of the first control signal occurring during the first sampling interval is identical to a waveform of the first control signal occurring during the second sampling interval, and a waveform of the second control signal occurring during the first sampling interval is identical to a waveform of the second control signal occurring during the second sampling interval.

24. The distance measuring system of any one of claims 13-18, **characterized in that** the sampling period is equal to a quarter of the pulse period.

FIG. 1

202

Send pulse from transmitter side intermittently, wherein
the pulse is reflected by target object, and reflected
signal is reflected from the target object accordingly

204

Utilize receiver side to perform signal sampling
operation multiple times according to sampling period
for a predetermined period of time, and accordingly
generate sampling result of the reflected signal,
wherein the predetermined period of time is longer than
or equal to two times a pulse period of the pulse

206

Detect time of flight of the pulse traveling from
the transmitter side to the receiver side
according to the sampling result

208

Measure distance between the target object and
reference position according to the time of flight

FIG. 2

FIG. 3

FIG. 4A

FIG. 4B

FIG. 5

FIG. 6

FIG. 7

FIG. 8

FIG. 9

## INTERNATIONAL SEARCH REPORT

| International application No. |
| --- |
| **PCT/CN2020/081061** |

**A. CLASSIFICATION OF SUBJECT MATTER**

G01S 17/48(2006.01)i; G01S 15/10(2006.01)i

According to International Patent Classification (IPC) or to both national classification and IPC

**B. FIELDS SEARCHED**

Minimum documentation searched (classification system followed by classification symbols)

G01S17/-;G01S13/-;G01S15/-

Documentation searched other than minimum documentation to the extent that such documents are included in the fields searched

Electronic data base consulted during the international search (name of data base and, where practicable, search terms used)

CNPAT, CNKI, WPI, EPODOC: 测, 非连续, 深圳市汇顶科技+, 脉冲, 时间, 测距, 距离, 发射, 间歇, 断续, 距, 发送, 不连续, 间断, 飞行时间, TOF; pulse, time, flight, distance, measur+, detect+, consecut+, non, periodic+, intermit+, discontinuous, rhythmic+

**C. DOCUMENTS CONSIDERED TO BE RELEVANT**

| Category* | Citation of document, with indication, where appropriate, of the relevant passages | Relevant to claim No. |
| --- | --- | --- |
| X | CN 109313264 A (SHENZHEN GOODIX TECHNOLOGY CO., LTD.) 05 February 2019 (2019-02-05) claims, description, paragraphs [0073]-[0115], figures 1-11 | 1-24 |
| X | CN 201845060 U (BEIJING HAIPPO ZHIHENG ELECTRICAL FIRE-PROOF TECHNOLOGY CO., LTD. et al.) 25 May 2011 (2011-05-25) description, paragraphs [0008]-[0009] | 1, 6, 13, 18 |
| A | CN 106908771 A (NATIONAL UNIVERSITY OF DEFENSE TECHNOLOGY, PLA) 30 June 2017 (2017-06-30) entire document | 1-24 |
| A | CN 103926590 A (HEFEI INSTITUTES OF PHYSICAL SCIENCE, CHINESE ACADEMY OF SCIENCES) 16 July 2014 (2014-07-16) entire document | 1-24 |
| A | US 2018128921 A1 (STMICROELECTRONICS RESEARCH & DEVELOPMENT LIMITED) 10 May 2018 (2018-05-10) entire document | 1-24 |

☑ Further documents are listed in the continuation of Box C. ☑ See patent family annex.

| | |
| --- | --- |
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **02 December 2020** | **21 December 2020** |

| Name and mailing address of the ISA/CN | Authorized officer |
| --- | --- |
| **China National Intellectual Property Administration (ISA/ CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2020/081061**

### C.    DOCUMENTS CONSIDERED TO BE RELEVANT

| Category* | Citation of document, with indication, where appropriate, of the relevant passages | Relevant to claim No. |
|---|---|---|
| A | EP 3232224 A1 (SICK AG) 18 October 2017 (2017-10-18)<br>      entire document | 1-24 |

Form PCT/ISA/210 (second sheet) (January 2015)

<table>
<tr><td colspan="2"><strong>INTERNATIONAL SEARCH REPORT</strong><br>Information on patent family members</td><td colspan="2">International application No.<br><strong>PCT/CN2020/081061</strong></td></tr>
</table>

| Patent document cited in search report | | | Publication date (day/month/year) | Patent family member(s) | | | Publication date (day/month/year) |
|---|---|---|---|---|---|---|---|
| CN | 109313264 | A | 05 February 2019 | WO | 2020042166 | A1 | 05 March 2020 |
| CN | 201845060 | U | 25 May 2011 | None | | | |
| CN | 106908771 | A | 30 June 2017 | CN | 106908771 | B | 11 October 2019 |
| CN | 103926590 | A | 16 July 2014 | CN | 103926590 | B | 30 March 2016 |
| US | 2018128921 | A1 | 10 May 2018 | US | 10598787 | B2 | 24 March 2020 |
| EP | 3232224 | A1 | 18 October 2017 | EP | 3232224 | B1 | 13 June 2018 |
| | | | | US | 2017293021 | A1 | 12 October 2017 |

Form PCT/ISA/210 (patent family annex) (January 2015)